# EUROPÄISCHE PATENTANMELDUNG

(11) **EP 1 911 726 A1**
(43) Veröffentlichungstag der Anmeldung: **16.04.2008**
(21) Anmeldenummer: 06025715.1
(22) Anmeldetag: 12.12.2006
(51) Int. Cl.: C03B 5/235, F23L 7/00

(54) **Glasschmelzofen und Verfahren zum Schmelzen von Glas**

(30) Priorität: 12.10.2006 DE 102006048435
(71) Anmelder: Linde Aktiengesellschaft, 80807 München (DE)
(72) Erfinder: Mahrenholtz, Hans, 86567 Hilgertshausen (DE); Mieth, Rainer, 85591 Vatterstetten (DE)
(74) Vertreter: Kasseckert, Rainer

(57) **Zusammenfassung**

Die Erfindung betrifft einen Ofen sowie ein Verfahren zum Schmelzen von Glas mit einem Brenner, welcher einen in das Ofeninnere ausgerichteten Brennermund (3) aufweist. Der Ofen weist dabei eine von dem Brenner räumlich getrennte Lanze (4) zum Einbringen eines sauerstoffhaltigen Gases auf. Eine in das Ofeninnere ausgerichtete Auslassöffnung der Lanze (4) weist dabei in die gleiche Ebene wie die Ausrichtung des Brennermundes (3) Der durch die beiden Ausrichtungen definierte Winkel (α) liegt zwischen 5° und 40°.

## Beschreibung

Die vorliegende Erfindung bezieht sich auf einen Ofen zum Schmelzen von Glas und auf ein Verfahren zum Schmelzen von Glas.

Öfen zum Schmelzen von Glas sind an sich bekannt. Diese weisen üblicherweise einen oder mehrere Brenner auf, welche jeweils so ausgerichtet sind, dass die Brennerflamme während des Betriebes in das Ofeninnere gerichtet ist. Die Brennerflamme bzw. der noch nicht gezündete Brennstoff tritt dabei aus dem Brennermund der Brenner aus.

Die zugehörigen Brenner werden in der Regel mit fossilen Brennstoffen, meistens Erdgas oder Öl, betrieben. Zum Unterhalt der Verbrennung wird der Flamme außerdem Sauerstoff zugeführt.

Bei einem so genannten regenerativen Brenner wird dem Ofeninneren vorgewärmte Luft durch Austrittsöffnungen in der Ofenwand zugeführt. Zum Vorwärmen der Luft wird dabei üblicherweise Ofenluft aus dem Ofeninneren verwendet. Dazu kann die Ofenluft dem Ofen entnommen und durch einen Schacht mit einem die Wärmeenergie der Ofenluft aufnehmendem Material, einem so genannten Regenerator, beispielsweise aus Ziegelsteinen, geführt werden. Die Luft für die Verbrennung wird zum Vorwärmen an dem aufgeheizten Regenerator vorbeigeleitet.

Der vorliegenden Erfindung liegt das Problem zugrunde, einen verbesserten Ofen zum Schmelzen von Glas mit einem Brenner anzugeben.

Die Erfindung richtet sich auf einen Ofen zum Schmelzen von Glas mit einem Brenner, welcher einen in das Ofeninnere ausgerichteten Brennermund aufweist, dadurch gekennzeichnet, dass der Ofen eine von dem Brenner räumlich getrennte Lanze zum Einbringen eines sauerstoffhaltigen Gases aufweist, welche eine in das Ofeninnere ausgerichtete Auslassöffnung aufweist, wobei die Ausrichtung des Brennermundes und die Ausrichtung der Auslassöffnung der Lanze in der gleichen Ebene liegen und dort einen Winkel zwischen 5° und 40° bilden.

Die Erfindung richtet sich auch auf ein entsprechendes Verfahren zum Schmelzen von Glas.

Bevorzugte Ausgestaltung der Erfindung sind in den abhängigen Ansprüchen angegeben und werden im Folgenden näher erläutert. Die Offenbarung bezieht sich dabei stets sowohl auf die Vorrichtungsaspekte als auch auf die Verfahrensaspekte der Erfindung.

Die Erfindung basiert auf der Tatsache, dass eine jahrelange Gewöhnung an die zuvor beschriebenen regenerativen Öfen zum Schmelzen von Glas vorliegt und sich diese in der Praxis bewährt haben. Ihr liegt die Erkenntnis zugrunde, dass das Schmelzen von Glas in den bekannten regenerativen Öfen unter anderem durch die räumliche Trennung von Brennern und Verbrennungsluftzufuhr und der Ausrichtung der Verbrennungsluftzufuhr zu den von den Brennern geworfenen Flammen bestimmt ist. Der sprachlichen Einfachkeit halber wird ab hier nur auf einen Brenner abgestellt, obwohl eine Mehrzahl vorhanden sein kann.

Die Erfindung basiert auf der Idee, eine räumlich von dem Brenner getrennte Lanze zum Einbringen eines sauerstoffhaltigen Gases in den Ofen einzusetzen. Dabei sind die Auslassöffnungen der Lanze und der Brennermund, also während des Betriebes die Wurfrichtung der Flamme, in die gleiche Ebene ausgerichtet und bilden dort einen Winkel zwischen 5° und 40°. Bevorzugter ist ein Winkel zwischen 10° und 30°; noch bevorzugter ist ein Winkel zwischen 15° und 25°.

Das sauerstoffhaltige Gas kann beispielsweise Luft sein oder auch mit zusätzlichem Sauerstoff angereicherte Luft bis hin zu reinem Sauerstoff.

Die Lanze ist dazu ausgelegt, das sauerstoffhaltige Gas zumindest mit einer solchen Geschwindigkeit in das Ofeninnere einbringen zu können, dass man während des Betriebes zumindest im Anschluss an die Auslassöffnung der Lanze von einem Strahl sprechen kann. Ähnlich ist der Brenner dazu ausgelegt, eine Flamme bzw. den Brennstoff mit hinreichender Geschwindigkeit in das Ofeninnere zu werfen, sodass der Flamme zumindest unmittelbar im Anschluss an den Brennermund eine von dem Brennermund weg weisende Ausrichtung zugeordnet werden kann.

Die Erfindung bringt mehrere Vorteile mit sich:

Zunächst stellt das Zuführen eines sauerstoffhaltigen Gases mittels einer Lanze in das Ofeninnere eine räumlich kompakte Lösung für das Zuführen von Verbrennungsluft dar. Weiter werden die Flammeneigenschaften durch die Erfindung positiv beeinflusst.

Würde man nämlich ein sauerstoffhaltiges Gas mit einem hohen Sauerstoffanteil verwenden und dieses ohne Vermischung mit Ofenluft der Brennerflamme zuführen, etwa in dem man die Sauerstofflanze in den Brennerkopf integriert, so würde dies zu einer hohen Flammentemperatur und zu einer hohen Stickoxiderzeugung führen. Erfindungsgemäß wird das sauerstoffhaltige Gas jedoch räumlich getrennt von der Flamme in den Ofen eingebracht. Dies führt dazu, dass der Strahl sauerstoffhaltigen Gases Ofenluft mitreißt und sich so das sauerstoffhaltige Gas mit der Ofenluft vermischt. Treffen der Strahl sauerstoffhaltigen Gases und die Flamme zusammen, weist der Strahl eine entsprechend geringe Sauerstoffkonzentration auf und wird die Flamme weniger heiß. Es entstehen weniger Stickoxide als bei einer hohen Flammentemperatur.

Durch die Ausrichtung des Strahls sauerstoffhaltigen Gases und der Flamme in die gleiche Ebene in einem spitzen Winkel und durch das Vermischen des sauerstoffhaltigen Gases mit der Ofenluft, kann eine besonders lange Flamme erzeugt werden. Eine lange Flamme ist vorteilhaft, da mit einer solchen eine gleichmäßige Beheizung des Ofeninneren über eine längere Strecke möglich ist als mit einer kurzen Flamme. Eine lange Flamme ist insbesondere dann vorteilhaft, wenn der Brenner so ausgerichtet ist, dass die Brennerflamme horizontal über der Oberfläche der Glasschmelze verläuft.

Durch das Vermischen der Verbrennungsluft mit der Ofenluft wird die Verbrennungsluft vor dem Zusammentreffen mit der Flamme vorgewärmt.

Je höher die Geschwindigkeit ist, mit der das sauerstoffhaltige Gas durch die Lanze in das Ofeninnere eingebracht wird, desto weiter kann der Strahl des sauerstoffhaltigen Gases in das Ofeninnere hineinreichen. Bei hohen Geschwindigkeiten reißt das sauerstoffhaltige Gas außerdem in verstärktem Maße umgebende Ofenluft mit und vermischt sich mit dieser, bevor es auf die Flamme trifft. Vorzugsweise ist die Lanze dazu ausgelegt das sauerstoffhaltige Gas mit einer Geschwindigkeit von zumindest 100 m in der Sekunde in den Ofen einzubringen. Noch bevorzugter ist eine Geschwindigkeit von zumindest 200 m pro Sekunde. Ganz besonders bevorzugt ist, wenn die Lanze dazu ausgelegt ist, das sauerstoffhaltige Gas mit Überschallgeschwindigkeit in den Ofen einzubringen. Dazu kann die sauerstoffhaltige Lanze etwa eine Lavaldüse aufweisen.

Bei einer bevorzugten Ausführungsform der Erfindung weist das sauerstoffhaltige Gas einen Massensauerstoffanteil von zumindest 40 % auf. Noch bevorzugter ist ein Massensauerstoffanteil von zumindest 85 %. Idealerweise wird reiner Sauerstoff in den Ofen eingebracht.

Bei einer bevorzugten Ausführungsform der Erfindung ragt die Lanze in das Ofeninnere hinein. Der Brenner umfasst einen Brennerkopf, welcher ebenfalls in das Ofeninnere hineinragt. An dem dem Ofeninneren zugewandten Ende des Brennerkopfes befindet sich der Brennermund. Bei dieser Ausführungsform ragt der Brennerkopf weiter in das Ofeninnere hinein als die Lanze, sodass das von der Lanze eingebrachte sauerstoffhaltige Gas ein Stück lang an einer Seite des Brennerkopfes entlangströmt. Auf diese Weise kann auch durch die Geometrie des Brennerkopfes mitbestimmt werden, wie sich das sauerstoffhaltige Gas und die Brennerflamme bezüglich der räumlichen Verteilung miteinander vereinigen. Es steht also ein weiterer Freiheitsgrad zur Einstellung der Flammengeometrie zur Verfügung. Vorzugsweise weist die der Lanze zugewandte Seite des Brennerkopfes, also die Seite des Brennerkopfes, an der im Betrieb das von der Lanze eingebrachte sauerstoffhaltige Gas entlangströmt, eine Orientierung auf, welche um nicht mehr als 10° von der Ausrichtung der Auslassöffnung der Lanze abweicht. Bevorzugter ist es, wenn diese Orientierung um nicht mehr als 5° von der Ausrichtung der Auslassöffnung der Lanze abweicht. Dabei soll die Orientierung dieser Seite des Brennerkopfes außerdem einen Winkel zwischen 0° und 55° mit der Ausrichtung des Brennermundes bilden. (Ist diese Seite des Brennerkopfes nicht gerade, so beziehen sich die Winkelangaben auf eine Ausgleichsgerade, welche so ausgerichtet ist, dass die aufsummierte quadratische Abweichung der Seite in der Ebene, in welche der Brennermund und die Lanze ausgerichtet sind, von dieser Ausgleichsgeraden minimal ist. Die Länge der Ausgleichsgeraden entspricht dabei der Strecke entlang der Seite des Brennerkopfes, entlang welcher Strecke das sauerstoffhaltige Gas im Betrieb strömt.)

Vorzugsweise ist der Brennerkopf zumindest zum Teil aus Stein aufgebaut. Idealerweise besteht er aus Stein.

Bei einer bevorzugten Ausführungsform ragt der Brennerkopf 200 mm bis 500 mm in das Ofeninnere hinein. Da der Brennerkopf und die Lanze räumlich getrennt sind, dabei allerdings immer in einem Winkel kleiner als 40° zueinander ausgerichtet sind, gibt es immer eine Seite des Brennerkopfes, welche als die der Lanze zugewandte Seite bezeichnet werden kann. Es ist bevorzugt, wenn diese Seite des Brennerkopfes auf Höhe des Brennermundes eine Stärke von 100 mm bis 500 mm aufweist. In anderen Worten: Der Brennerkopf umfasst den Brennermund und bildet einen Kragen um den Brennerkopf. Dieser Kragen weist an seiner der Lanze zugewandten Seite die eben vorgeschlagene Stärke auf.

Wie oben bereits erwähnt richtet sich die Erfindung auch auf ein Verfahren zum Schmelzen von Glas in einem Ofen mit einem Brenner, welcher einen in das Ofeninnere ausgerichteten Brennermund aufweist, gekennzeichnet durch die Schritte: Einbringen eines sauerstoffhaltigen Gases durch eine von dem Brenner räumlich getrennte Lanze in den Ofen aus einer in das Ofeninnere gerichteten Auslassöffnung, wobei die Auslassöffnung der Lanze bezogen auf die Ausrichtung des Brennermundes so ausgerichtet wird, dass die jeweiligen Ausrichtungen in der gleichen Ebene liegen und dort einen Winkel zwischen 5° und 40° bilden. Bevorzugter ist ein Winkel zwischen 10° und 30°; noch bevorzugter ist ein Winkel zwischen 15° und 25°.

Vorzugsweise werden der Winkel zwischen der Ausrichtung der Auslassöffnung der Lanze und der Ausrichtung des Brennermundes, der Sauerstoffanteil des sauerstoffhaltigen Gases und die Geschwindigkeit, mit der das sauerstoffhaltige Gas in den Ofen eingebracht wird, so eingestellt, dass der Sauerstoffanteil des von der Lanze ausgehenden Strahls vor der Vereinigung mit der Brennerflamme nicht mehr als 150 % des Sauerstoffanteils der Ofenluft ausmacht. Noch bevorzugter ist ein entsprechender Sauerstoffanteil von nicht mehr als 125 %; noch bevorzugter ist ein Sauerstoffanteil von nicht mehr als 110 %. Idealerweise entspricht der Sauerstoffanteil des von der Lanze ausgehenden Strahls sauerstoffhaltigen Gases vor der Vereinigung mit der Brennerflamme dem Sauerstoffanteil der Ofenluft. Ist der Sauerstoffanteil des sauerstoffhaltigen Gases hoch, so sind entsprechend dieser bevorzugten Ausführungsart des Verfahrens die Geschwindigkeit des Strahls und der Winkel zur Ausrichtung der Brennerflamme so einzustellen, dass der Strahl sauerstoffhaltigen Gases sich hinreichend mit der Ofenluft vermischen kann. Auf diese Weise können besonders große Flammenlängen bei nicht allzu hoher Flammentemperatur erzielt werden.

Jeder erfindungsgemäße Ofen weist eine maximal mögliche Flammenlänge auf. Diese kann etwa trivialerweise durch eine dem Brenner gegenüber liegende Wand begrenzt sein, oder aber durch die Eigenschaften des Brennerkopfes in Kombination mit der Lanze und deren Abstand voneinander. Vorzugsweise werden der Winkel zwischen der Ausrichtung der Auslassöffnung der Lanze und der Ausrichtung des Brennermundes, der Sauerstoffanteil des sauerstoffhaltigen Gases und die Geschwindigkeit, mit der das sauerstoffhaltige Gas in den Ofen eingebracht wird, so eingestellt, dass die Flammenlänge zumindest 80 % dieser maximalen Länge beträgt. Noch bevorzugter ist eine Flammenlänge von zumindest 90 % der maximalen Länge. Idealerweise entspricht die Flammenlänge der maximal möglichen Flammenlänge.

Das erfindungsgemäße Verfahren und seine bevorzugten Ausgestaltungen können natürlich durch eine entsprechend ausgelegte Steuerung ausgeführt werden.

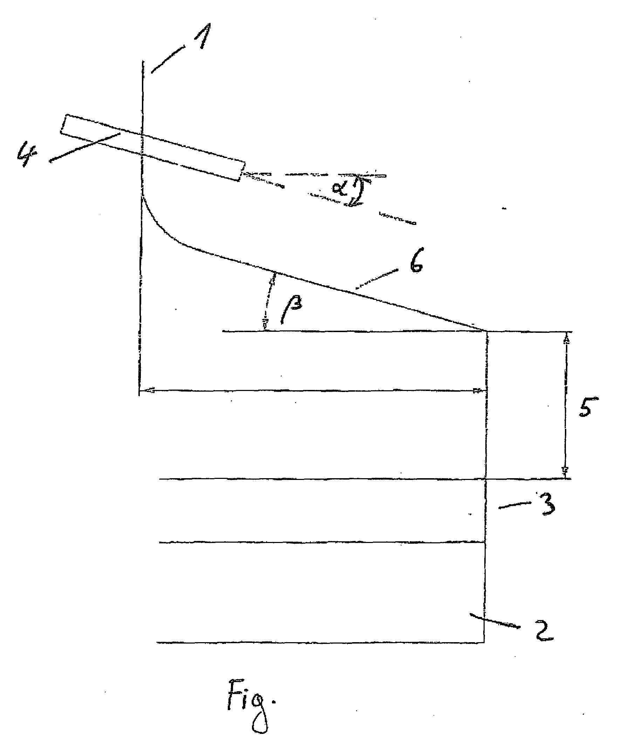

Im Folgenden wird die Erfindung beispielhaft anhand einer Zeichnung erläutert. Dabei offenbarte Merkmale sind sowohl für den Vorrichtungsaspekt als auch für den Verfahrensaspekt der Erfindung maßgeblich. Die Figur zeigt schematisch einen Ausschnitt aus einer Wand eines erfindungsgemäßen Ofens mit einem Brennerkopf und einer Lanze als Ausführungsbeispiel.

Die Figur zeigt einen Ausschnitt aus einem Querschnitt entlang einer Wand 1 eines Ofens zum Schmelzen von Glas. Öfen zum Schmelzen von Glas sind an sich bekannt.

Die Ofenwand 1 trennt das Ofeninnere (rechts in der Figur) von einer Umgebung (links in der Figur). Ausgehend von der Ofenwand 1 ragt ein Brennerkopf 2 (als Teil eines Brenners, nicht in seiner Gesamtheit gezeigt) aus Stein in den Ofen hinein. Der Brennerkopf 2 umfasst kragenartig einen Brennermund 3, durch den im Betrieb der Brennstoff bzw. die Flamme in das Ofeninnere hineingeworfen wird.

Ausgehend von der Innenseite der Ofenwand 1 ragt der Brennerkopf 2 400 mm in das Ofeninnere hinein.

Oberhalb des Brennerkopfes 2 ist eine Lanze 4 in die Ofenwand 1 zum Einbringen eines sauerstoffhaltigen Gases, hier reiner Sauerstoff, in das Ofeninnere, eingebettet. Die Lanze 4 ist dazu ausgelegt, dass sauerstoffhaltige Gas im Betrieb mit Überschallgeschwindigkeit in das Ofeninnere einzubringen. Dazu weist sie an ihrem dem Ofeninneren zugewandten Ende eine Lavaldüse (nicht gezeigt) auf.

Der Brennerkopf 2 bzw. der Brennermund 3 und die Lanze 4 bzw. die Auslassöffnung der Lanze 4 sind in die gleiche Ebene ausgerichtet. Der Brennermund 3 weist horizontal in das Ofeninnere hinein, während die Lanze 4 um einen Winkel α, hier 20°, gegenüber der Horizontalen gekippt ist. Da die Lanze 4 und der Brennerkopf 2 übereinander an der gleichen Ofenwand 1 angebracht sind, weisen im Betrieb die Brennerflamme und der Sauerstoffstrahl die gleiche Orientierung auf; sie sind lediglich bezüglich ihrer Hauptausbreitungsrichtung um den Winkel α verkippt.

Die Auslassöffnung der Lanze 4 bleibt hinter dem Brennermund 3 zurück. Der von der Lanze 4 eingebrachte Sauerstoffstrahl saugt die Ofenluft an, vermischt sich mit dieser und verbreitert sich mit zunehmender zurückgelegter Strecke in Richtung Ofeninneres. Brennerkopf 2 und Lanze 4 liegen dabei so dicht nebeneinander, dass der Sauerstoffstrahl von einer der Lanze 4 zugewandten Seite 6 des Brennerkopfes 2 geführt wird, sobald sich der Strahl hinreichend aufgeweitet hat. Die der Lanze 4 zugewandte Seite 6 des Brennerkopfes 2 ist dabei um den Winkel β, ebenfalls 20° verkippt, sodass die Ausrichtung dieser Seite 6 mit der Hauptausbreitungsrichtung des Sauerstoffstrahls übereinstimmt.

In Richtung der Seite 6 des Brennerkopfes 2 weist die kragenartige Umfassung des Brennermundes 3 eine Stärke 5 von 150 mm auf, sodass der von der Seite 6 des Brennerkopfes 2 geführte Sauerstoffstrahl nicht unmittelbar nach dem Ende des Brennerkopfes 2 mit der Flamme zusammenstößt.

Der Winkel zwischen der Ausrichtung der Auslassöffnung der Lanze und der Ausrichtung des Brennermundes, der Sauerstoffanteil des sauerstoffhaltigen Gases und die Geschwindigkeit mit der das sauerstoffhaltige Gas in den Ofen eingebracht wird, sind so aufeinander abgestimmt, dass die Flammenlänge ihrer maximal möglichen Flammenlänge entspricht und der Strahl aus ursprünglich reinem Sauerstoff sich so weit mit der Ofenluft vermischt, dass die Sauerstoffkonzentration in der aus dem Strahl entstehenden Strömung der Sauerstoffkonzentration in der umgebenden Ofenluft entspricht.

### Bezugszeichenliste:

- 1: Ofenwand
- 2: Brennerkopf
- 3: Brennermund
- 4: Lanze
- 5: Kragenstärke
- 6: Seite
- α: Winkel
- β: Winkel

## Patentansprüche

1. Ofen zum Schmelzen von Glas mit einem Brenner, welcher einen in das Ofeninnere ausgerichteten Brennermund (3) aufweist,
**dadurch gekennzeichnet, dass** der Ofen eine von dem Brenner räumlich getrennte Lanze (4) zum Einbringen eines sauerstoffhaltigen Gases aufweist, welche eine in das Ofeninnere ausgerichtete Auslassöffnung aufweist, wobei die Ausrichtung des Brennermundes (3) und die Ausrichtung der Auslassöffnung der Lanze (4) in der gleichen Ebene liegen und dort einen Winkel (α) zwischen 5° und 40° bilden.

2. Ofen nach Anspruch 1, bei dem die Lanze (4) dazu ausgelegt ist, das sauerstoffhaltige Gas mit einer Geschwindigkeit von zumindest 100 m/s in den Ofen einzubringen.

3. Ofen nach einem der vorangehenden Ansprüche, bei dem das sauerstoffhaltige Gas einen Massensauerstoffanteil von zumindest 40 % aufweist.

4. Ofen nach einem der vorangehenden Ansprüche, bei dem die Lanze (4) in das Ofeninnere hineinragt,
mit einem den Brennermund (3) umfassenden Brennerkopf (2), welcher weiter in das Ofeninnere hineinragt als die Lanze (4), und
welcher Ofen so ausgelegt ist, dass das von der Lanze (4) eingebrachte sauerstoffhaltige Gas an einer Seite des Brennerkopfes (2) entlangströmt.

5. Ofen nach Anspruch 4, bei dem die der Lanze (4) zugewandte Seite (6) des Brennerkopfes (2) eine Orientierung (β) aufweist, welche um nicht mehr als 10° von der Ausrichtung (α) der Auslassöffnung der Lanze (4) abweicht und welche einen Winkel zwischen 0° und 55° mit der Ausrichtung des Brennermundes (3) bildet.

6. Ofen nach Anspruch 4 oder 5, bei dem der Brennerkopf (2) Stein als Konstruktionsmerkmal aufweist.

7. Ofen nach einem der Ansprüche 4 bis 6, bei dem der Brennerkopf (2) 200 mm bis 500 mm in das Ofeninnere hineinragt.

8. Ofen nach einem der Ansprüche 4 bis 7, bei dem der Brennermund (3) von einem Kragen (5) des Brennerkopfes (2) umgeben ist und der Kragen (5) an seiner der Lanze (4) zugewandten Seite (6) eine Stärke von 100 mm bis 500 mm aufweist.

9. Verfahren zum Schmelzen von Glas in einem Ofen mit einem Brenner, welcher einen in das Ofeninnere ausgerichteten Brennermund (3) aufweist,
**gekennzeichnet durch** die Schritte:
Einbringen eines sauerstoffhaltigen Gases **durch** eine von dem Brenner räumlich getrennte Lanze (4) in den Ofen aus einer in das Ofeninnere gerichteten Auslassöffnung,
wobei die Auslassöffnung der Lanze (4) bezogen auf die Ausrichtung des Brennermundes (3) so ausgerichtet ist, dass die jeweiligen Ausrichtungen in der gleichen Ebene liegen und dort einen Winkel (α) zwischen 5° und 40° bilden.

10. Verfahren nach Anspruch 9, bei dem der Winkel (α) zwischen der Ausrichtung der Auslassöffnung der Lanze (4) und der Ausrichtung des Brennermundes (3), der Sauerstoffanteil des sauerstoffhaltigen Gases und die Geschwindigkeit, mit der das sauerstoffhaltige Gas in den Ofen eingebracht wird, so eingestellt werden, dass der Sauerstoffanteil des von der Lanze (4) ausgehenden Stroms sauerstoffhaltigen Gases vor der Vereinigung mit der während des Betriebs brennenden Brennerflamme nicht mehr als 150 % des Sauerstoffanteils der Ofenluft ausmacht.

11. Verfahren nach Anspruch 9 oder 10, bei dem der Winkel (α) zwischen der Ausrichtung der Auslassöffnung der Lanze (4) und der Ausrichtung des Brennermundes, des Sauerstoffanteils des sauerstoffhaltigen Gases und die Geschwindigkeit, mit der das sauerstoffhaltige Gas in den Ofen eingebracht wird, so eingestellt werden, dass die Flammenlänge zumindest 80% ihrer maximalen Länge beträgt.

12. Ofen nach einem der Ansprüche 1 bis 8, ausgelegt für ein Verfahren nach einem der Ansprüche 9 bis 11.

13. Verfahren nach einem der Ansprüche 9 bis 11, unter Verwendung eines Ofens nach einem der Ansprüche 1 bis 8.
